# EUROPÄISCHE PATENTSCHRIFT

(11) **EP 2 393 698 B1**
(45) Veröffentlichungstag und Bekanntmachung des Hinweises auf die Patenterteilung: **08.07.2015**
(21) Anmeldenummer: 10701457.3
(22) Anmeldetag: 14.01.2010
(51) Int. Cl.: B60T 15/02, B60T 17/04

(54) **KOLBENVENTIL, INSBESONDERE FÜR EINE PNEUMATISCHE BREMSANLAGE EINES FAHRZEUGS**
PISTON VALVE, ESPECIALLY FOR A PNEUMATIC BRAKE SYSTEM IN A VEHICLE
SOUPAPE À PISTON, NOTAMMENT POUR UN SYSTÈME DE FREINAGE PNEUMATIQUE D'UN VÉHICULE

(30) Priorität: 05.02.2009 DE 102009007677
(43) Veröffentlichungstag der Anmeldung: 14.12.2011
(73) Patentinhaber: KNORR-BREMSE Systeme für Nutzfahrzeuge GmbH, 80809 München (DE)
(72) Erfinder: VOITH, András, H-1183 Budapest (HU); TÓTH, János, H-6000 Kecskemét (HU); MIHÁLYI, Attila, H-6000 Kecskemét (HU); MUSER, Michael, 85276 Pfaffenhofen (DE); KÁNTOR, Kornél, H-6000 Kecskemét (HU)
(74) Vertreter: Schönmann, Kurt
(86) Internationale Anmeldenummer: PCT/EP2010/000174
(87) Internationale Veröffentlichungsnummer: WO 2010/089021

(56) Entgegenhaltungen:
- EP-A2- 1 571 516
- DE-A1- 4 216 247
- DE-U1- 20 016 538
- DE-U1- 20 315 718
- US-A- 2 847 182
- US-A- 3 338 257

## Beschreibung

Die Erfindung betrifft ein Kolbenventil, insbesondere für eine pneumatische Bremsanlage eines Fahrzeugs, mit einem in einem Bereich eines Gehäuses in einer axialen Richtung beweglichen Schaltkolben, zumindest zwei Anschlüssen, die in einer ersten Schaltstellung des Schaltkolbens miteinander gekoppelt sind, und einem Dichtelement, das eine Verbindung zwischen den zumindest zwei Anschlüssen in zumindest einer zweiten Schaltstellung des Schaltkolbens abdichtet, wobei das Dichtelement als Nutring mit einer flexiblen Dichtlippe ausgeführt ist, die als Rückschlagventil zwischen den zumindest zwei Anschlüssen arbeitet.

Kolbenventile, die in Abhängigkeit von ihrer Schaltstellung an ihnen angeordnete Anschlüsse in unterschiedlichen Kombinationen miteinander verbinden oder trennen sind weit verbreitet. Ihre Betätigung kann beispielsweise manuell, elektrisch oder pneumatische erfolgen, wobei üblicherweise ein Schaltkolben in einer axialen Betätigungsrichtung im Inneren des Kolbenventils bewegt wird. Durch die Bewegung des Schaltkolbens gegenüber dem Ventilgehäuse werden Dichtungen und/oder Profilierungen gegeneinander bewegt, so dass verschiedene Druckluftpfade im Inneren des Kolbenventils geöffnet und/oder geschlossen werden. Auf diese Weise können die verschiedenen Anschlüsse des Kolbenventils in Abhängigkeit von der Schaltposition in unterschiedlichen Kombinationen miteinander verbunden oder voneinander getrennt werden. Dabei werden üblicherweise O-Ringe als Dichtungen verwendet, die entweder gegenüber dem beweglichen Schaltkolben oder gegenüber dem Ventilgehäuse festgelegt sind und in Abhängigkeit von der Schaltstellung des beweglichen Schaltkolbens Druckluftpfade zwischen Anschlüssen abdichten oder freigeben.

Nachteilig bei einem derartig aufgeführten Kolbenventil ist jedoch die beschränkte Funktionalität, da die einzelnen Druckluftpfade lediglich freigegeben oder geschlossen werden können und darüber hinaus gehende Funktionen extern zu realisieren sind, wodurch der Fertigungsaufwand der Anlage, in die das Kolbenventil integriert ist, als hoch anzusehen ist. Ein derartiges Kolbenventil ist beispielsweise aus der DE 203 15 718 U1 bekannt.

Aus der EP 0 822 359 A1 ist ein Kolbenventil mit gegenüber einem Ventilgehäuse bewegbaren Dichtelement, das als Rückschlagventil wirkt, bekannt.

Hiervon ausgehend liegt der vorliegenden Erfindung die Aufgabe zugrunde, ein Kolbenventil mit einer erhöhten Lebensdauer und geringem Fertigungsaufwand bereitzustellen.

Diese Aufgabe wird erfindungsgemäß dadurch gelöst, dass in dem Gehäuse im Inneren des Bereiches ein gegenüber dem Gehäuse festgelegter Einsatz vorgesehen ist, in dem der bewegliche Schaltkolben wenigstens teilweise geführt wird, und dass das Dichtelement zwischen dem Einsatz und dem Gehäuse angeordnet ist. Auf diese Weise kann das Kolbenventil zugleich die Funktionalität eines Rückschlagventils zwischen zwei Anschlüssen des Kolbenventils wahrnehmen. Ein zusätzliches, außerhalb des Kolbenventils angeordnetes Rückschlagventil kann somit eventuell entfallen. Die Wirkungsrichtung des Rückschlagventils kann durch die Einbaurichtung des Nutrings vorgegeben werden. Die Kosten einer Ausführung des Dichtelements als Nutring sind gegenüber der Einsparung eines außerhalb des Kolbenventils anzuordnenden Rückschlagventils zu vernachlässigen, so dass der Fertigungsaufwand insgesamt reduziert werden kann.

Durch den Einsatz kann die zum Fertigen des Gehäuses notwendige Präzision reduziert werden, da lediglich statisch wirkende Dichtungen zwischen dem Einsatz und dem Gehäuse notwendig sind, die die bei der Fertigung des Gehäuses aufgetretenen Abweichungen leicht ausgleichen können. Weiterhin können die in das Gehäuse geführten Anschlüsse hinter dem Einsatz verborgen werden, um große Strömungsquerschnitte bei kleinen baulichen Abmessungen des Kolbenventils, insbesondere geringe zum Schalten des Kolbenventils notwendige Hübe des Schaltkolbens, zu ermöglichen. Sowohl der Einsatz als auch der Schaltkolben können außerhalb des Gehäuses mit einer ausreichenden Präzision gefertigt werden.

Durch das Anordnen des Dichtelements zwischen dem Einsatz und dem Gehäuse wird eine übermäßige Belastung des Nutrings beim Schalten des Kolbenventils durch Bewegen des Schaltkolbens vermieden werden, da der Einsatz gegenüber dem Gehäuse festgelegt ist. Dies erhöht die Lebensdauer des Dichtelements stark.

Weiterhin kann vorgesehen sein, dass zumindest ein weiteres Dichtelement zwischen dem Gehäuse und dem Einsatz vorgesehen ist, um das Kolbenventil nach außen abzudichten. Das weitere Dichtelement dichtet die in dem Kolbenventil verlaufenden Druckluftpfade gegen die Umgebung ab.

Besonders bevorzugt ist, dass an dem beweglichen Schaltkolben Dichtringe angeordnet sind, die in zumindest einigen Schaltpositionen des beweglichen Schaltkolbens eine weitere Verbindung zwischen den zumindest zwei Anschlüssen des Kolbenventils trennen. Durch das Bewegen der Dichtringe werden je nach Stellung des beweglichen Schaltkolbens verschiedene Druckluftpfade innerhalb des Kolbenventils freigegeben oder gesperrt.

Alternativ kann vorgesehen sein, dass an dem Einsatz Dichtringe angeordnet sind, die in Abhängigkeit von der Schaltposition des beweglichen Schaltkolbens in zumindest einigen dieser Schaltpositionen eine weitere Verbindung zwischen den zumindest zwei Anschlüssen des Kolbenventils trennen. Bei dieser alternativen Ausführungsform drückt der bewegliche Kolben in zumindest einigen Schaltpositionen gegen die Dichtringe, so dass in diesen Schaltpositionen einige ansonsten eventuell freigegebene Druckluftpfade gesperrt sind.

Die Erfindung wird nun mit Bezug auf die begleitenden Zeichnungen anhand einer bevorzugten Ausführungsform beispielhaft erläutert.

Es zeigen:
- Figur 1: ein Kolbenventil gemäß dem Stand der Technik;
- Figur 2: ein erfindungsgemäßes Kolbenventil in einer ersten Schaltposition;
- Figur 3: ein erfindungsgemäßes Kolbenventil in einer zweiten Schaltposition;
- Figur 4: einen Ausschnitt eines erfindungsgemäßen Kolbenventils mit einem Nutring; und
- Figur 5: Schaltbilder der Ventile mit Nutring und mit Dichtring.

In den folgenden Zeichnungen bezeichnen gleiche Bezugszeichen gleiche oder gleichartige Teile.

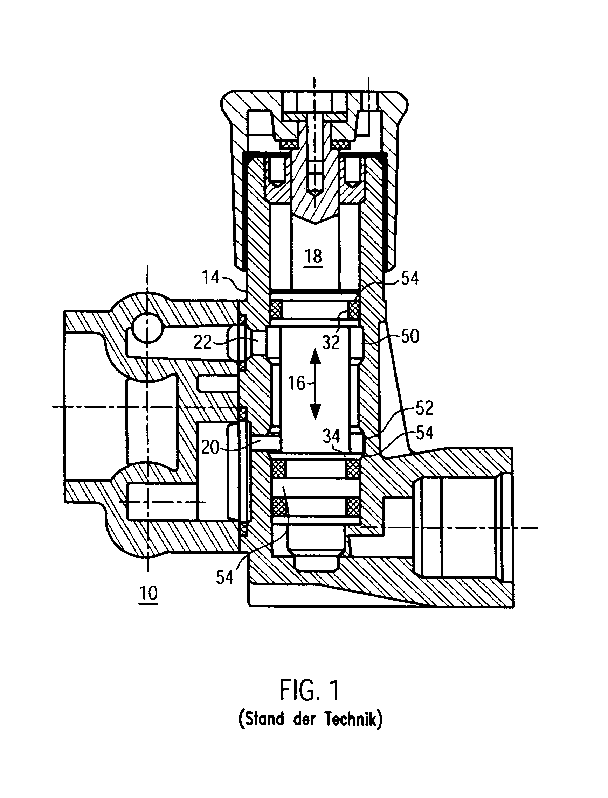

Figur 1 zeigt ein Kolbenventil gemäß dem Stand der Technik. Das dargestellte Kolbenventil 10 weist einen im Inneren eines Gehäuses 14 in einer axialen Richtung 16 beweglichen Schaltkolben 18 auf. An dem Schaltkolben 18 sind Dichtringe 32, 34 angeordnet, die durch Schultern 54 abgestützt werden. Ein weiterer Dichtring 36 kann für die sichere Dichtfunktion in allen Kolbenpositionen vorgesehen sein. Das Gehäuse 14 umfasst einen ersten Anschluss 20 und einen zweiten Anschluss 22, die in einen Bereich im Inneren des Gehäuses 14 münden, in dem der bewegliche Schaltkolben 18 angeordnet ist. Während der Bewegung des Schaltkolbens 18 in axialer Richtung 16 werden die Dichtringe 34, 36 an dem Anschluss 20 vorbeibewegt, so dass sich ein Druckluftpfad zwischen dem ersten Anschluss 20 und dem zweiten Anschluss 22 öffnet beziehungsweise schließt. In der Kolbenposition, in der eine Verbindung zwischen den Anschlüssen 20 und 22 geschlossen ist, kann ein weiterer Druckluftpfad zwischen dem ersten Anschluss 20 und einen dritten Anschluss 44 geöffnet werden. Um eine Beschädigung der Dichtringe 32, 34, 36 während der Schaltbewegung und auch während der Montage des Schaltkolbens 18 zu vermeiden, sind den Dichtringen zugeordnete Auskehlungen 50, 52 im Mündungsbereich der beiden Anschlüsse 20, 22 zugeordnet.

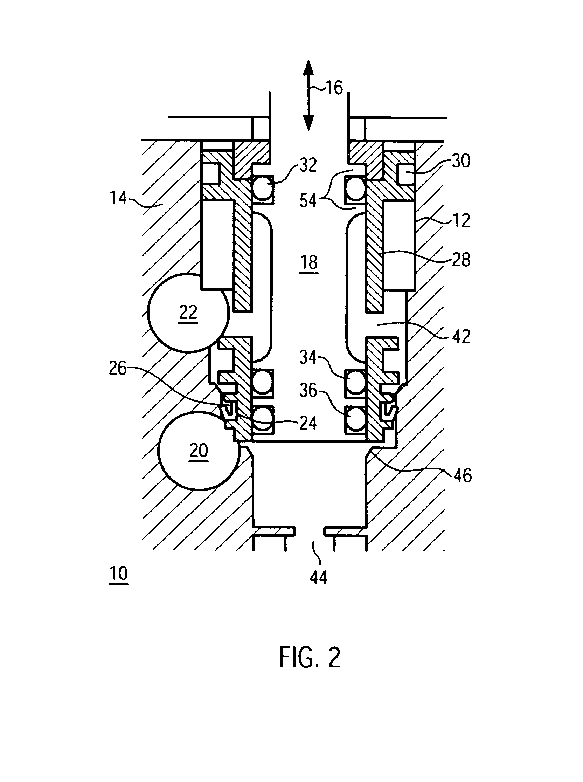

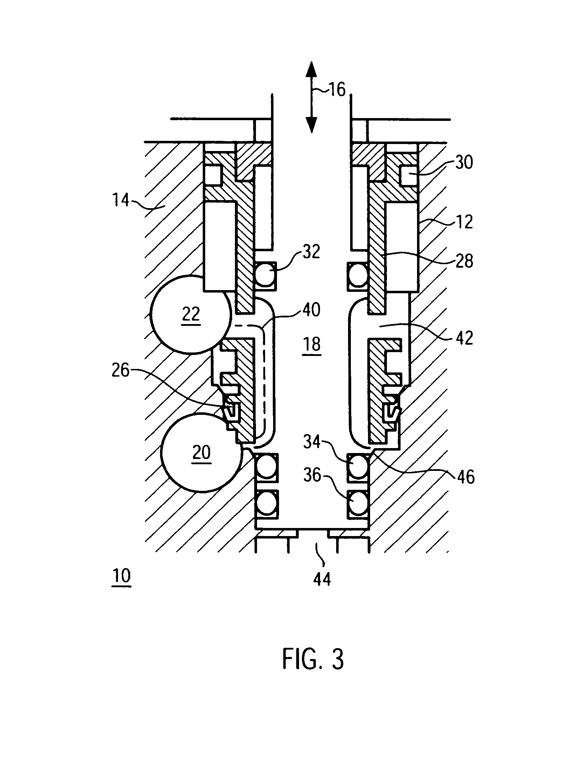

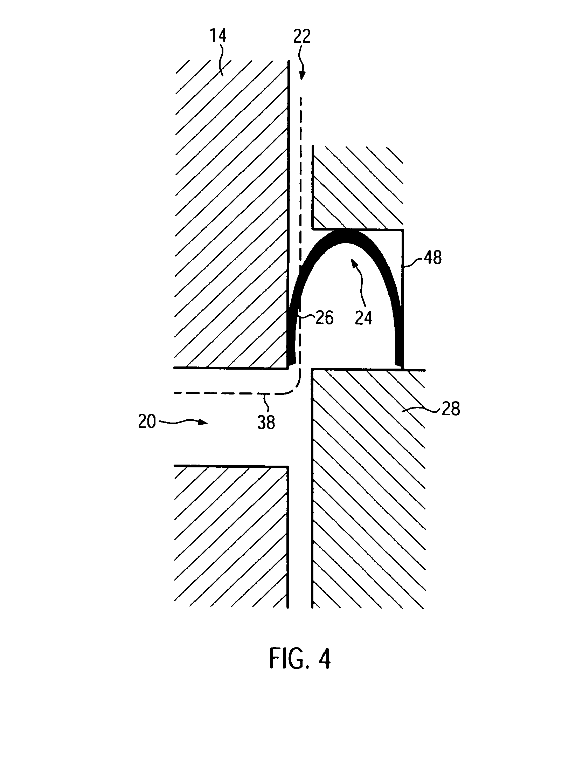

Figur 2 zeigt ein erfindungsgemäßes Kolbenventil in einer ersten Schaltposition. Das dargestellte Kolbenventil 10 umfasst neben dem ersten Anschluss 20 und dem zweiten Anschluss 22 einen dritten Anschluss 44, der in der dargstellten Schaltposition des Kolbenventils 10 über einen Spalt 46 mit dem ersten Anschluss 20 verbunden ist. Weiterhin umfasst das Kolbenventil 10 einen im Inneren des Gehäuses 14 in einem Bereich 12 festgelegten Einsatz 28, an dem ein Dichtelement 24 mit einer flexiblen Dichtlippe 26 und ein weiteres Dichtelement 30 angeordnet sind. Das weitere Dichtelement 30 dichtet das Kolbenventil 10 nach außen ab. Das Dichtelement 24 dichtet einen Druckluftpfad zwischen dem ersten Anschluss und dem zweiten Anschluss 22 in Richtung auf den ersten Anschluss 20 nach Art eines Rückschlagventils ab, wobei die genaue Funktionsweise im Zusammenhang mit Figur 4 erläutert wird. Im Inneren des Einsatzes 28 ist der in axialer Richtung bewegliche Schaltkolben 18 angeordnet, der Dichtringe 32, 34, 36 über Schultern 54 abstützt, wobei Druckluft über eine Bohrung 42 von dem zweiten Anschluss 22 in das Innere des Einsatzes 28 einströmen kann. Die Dichtringe 32, 34, 36 stellen eine dichte Verbindung zwischen dem beweglichen Schaltkolben 18 und dem Einsatz 28 beziehungsweise dem Gehäuse 14 her, wobei in der dargestellten Schaltstellung des Kolbenventils 10 kein Druckluftpfad zwischen dem zweiten Anschluss 22 und dem ersten Anschluss 20 durch den Schaltkolben 18 freigegeben ist, während ein Druckluftpfad zwischen dem ersten Anschluss 20 und dem dritten Anschluss 44 über den Spalt 46 und weiter durch dem Nutring 24 als Rückschlagventil zu dem zweitem Anschluss 22 freigegeben ist. Eine zweite Schaltposition des Kolbenventils 10 wird im Folgenden im Zusammenhang mit Figur 3 dargestellt.

Figur 3 zeigt ein erfindungsgemäßes Kolbenventil in einer zweiten Schaltposition. In der dargestellten Schaltposition ist eine weitere Verbindung 40 zwischen dem zweiten Anschluss 22 und dem ersten Anschluss 20 freigegeben, die durch die Bohrung 42 zunächst in das Innere des Einsatzes 28 und von dort über den Spalt 46 zu dem ersten Anschluss 20 verläuft. Gleichzeitig ist eine Verbindung zwischen dem ersten Anschluss 20 und dem dritten Anschluss 44 durch den beweglichen Schaltkolben 18 mit den Dichtringen 34 und 36 versperrt.

Figur 4 zeigt einen Ausschnitt eines erfindungsgemäßen Kolbenventils mit einem Nutring. Vergrößert dargestellt ist schematisch der Bereich um das Dichtelement 24. Das Dichtelement 24 ist in einer Ausnehmung 48 des Einsatzes 28 angeordnet und dichtet im Normalfall eine Verbindung 38 zwischen dem zweiten Anschluss 22 und dem ersten Anschluss 20 ab, wobei eine flexible Dichtlippe 26 des Dichtelementes 24 gegen das Gehäuse des Kolbenventils gepresst wird. Das in Figur 4 dargestellte Dichtelement wirkt dabei als ein Rückschlagventil zwischen dem zweiten Anschluss 22 und dem erstem Anschluss 20, wobei eine Öffnung der Verbindung 38 bei Vorliegen eines Überdrucks an dem ersten Anschluss 20 gegenüber dem zweiten Anschluss 22 erfolgt. In diesem Fall wird die flexible Dichtlippe 26 aufgrund des Druckgradienten von dem Gehäuse 14 weg in die Ausnehmung 48 gepresst, so dass ein Überströmen von Druckluft von dem ersten Anschluss 20 zu dem zweiten Anschluss 22 möglich wird. Nach Abbau des Druckgradienten zwischen dem ersten Anschluss 20 und dem zweiten Anschluss 22 schließt das Dichtelement 24 die Verbindung 38 aufgrund seiner Eigenspannung, wobei die flexible Dichtlippe 26 sich wieder an das Gehäuse 14 anlegt. Die Sperrrichtung des Dichtelementes 24 kann durch eine Veränderung der Einbaurichtung beeinflusst werden, wobei das in Figur 2 beziehungsweise 3 dargestellte Kolbenventil 10 ein Dichtelement 24 aufweist, welches seine Sperrwirkung aufgrund seiner Einbauorientierung in der zu Figur 4 umgekehrten Strömungsrichtung entfaltet.

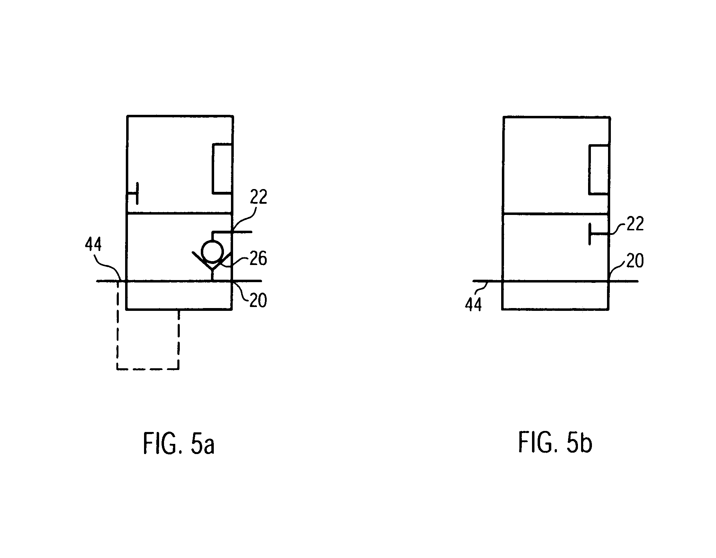

Bei einer weiteren nicht explizit dargestellten Variante des Ventils wird anstelle des Nutrings 24 ein Dichtring zwischen dem Gehäuse und dem Einsatz 28 eingebaut. Daraus ergibt sich der Vorteil, dass, bis auf den Nutring, der durch einen Dichtring ersetzt wird, die gleichen Bauelemente für die Ausbildung eines weiteren Ventils mit veränderter Funktion verwendet werden können. Die Schaltbilder der zwei Ventilausführungen mit Nutring beziehungsweise mit Dichtring sind in der Figur 5a beziehungsweise Figur 5b dargestellt.

Im Gegensatz zu der in den Figuren 2 bis 4 beschriebenen Ausführungsform eines Kolbenventils mit einem Einsatz 28 ist die Verwendung eines als Rückschlagventil wirkenden Nutringes als Dichtelement auch ohne einen Einsatz 28 denkbar. In diesem Fall dichtet das als Rückschlagventil wirkende Dichtelement 24 direkt zwischen dem beweglichen Schaltkolben 18 und dem Gehäuse 14 des Kolbenventils 10 ab. Da der Schaltkolben 18 gegenüber dem Gehäuse 14 des Kolbenventils 10 beweglich ausgeführt ist, ist das Dichtelement 24 bei dieser Ausführungsform einer höheren Belastung ausgesetzt, der beispielsweise durch Auskehlungen, wie sie aus dem Stand der Technik bekannt sind, Rechnung zu tragen ist. Weiterhin ist es möglich die notwendigen Dichtringe nicht an dem Schaltkolben sondern an dem Einsatz 28, beziehungsweise, falls dieser nicht vorhanden ist, an dem Gehäuse festzulegen.

### Bezugszeichenliste

- 10: Kolbenventil
- 12: Bereich
- 14: Gehäuse
- 16: axiale Richtung
- 18: Schaltkolben
- 20: erster Anschluss
- 22: zweiter Anschluss
- 24: Dichtelement
- 26: flexible Dichtlippe
- 28: Einsatz
- 30: weiteres Dichtelement
- 32: Dichtring
- 34: Dichtring
- 36: Dichtring
- 38: Verbindung
- 40: weitere Verbindung
- 42: Bohrung
- 44: dritter Anschluss
- 46: Spalt
- 48: Ausnehmung
- 50: Auskehlung
- 52: weitere Auskehlung
- 54: Schulter

## Patentansprüche

1. Kolbenventil (10), insbesondere für eine pneumatische Bremsanlage eines Fahrzeugs, mit
- einem in einem Bereich (12) eines Gehäuses (14) in einer axialen Richtung (16) beweglichen Schaltkolben (18),
- zumindest zwei Anschlüssen (20, 22), die in einer ersten Schaltstellung des Schaltkolbens (18) miteinander gekoppelt sind, und
- einem Dichtelement (24), das eine Verbindung (38) zwischen den zumindest zwei Anschlüssen (20, 22) in zumindest einer zweiten Schaltstellung des Schaltkolbens (18) abdichtet,
- wobei in dem Gehäuse (14) im Inneren des Bereiches (12) ein gegenüber dem Gehäuse (14) festgelegter Einsatz (28) vorgesehen ist, in dem der bewegliche Schaltkolben (18) wenigstens teilweise geführt ist, und
- wobei das Dichtelement (24) als Rückschlagventil zwischen den zumindest zwei Anschlüssen (20, 22) arbeitet,
**dadurch gekennzeichnet**, - dass das Dichtelement (24) als Nutring mit einer flexiblen Dichtlippe (26) ausgeführt ist
- dass das Dichtelement (24) zwischen dem Einsatz (28) und dem Gehäuse (14) angeordnet ist.

2. Kolbenventil (10) nach Anspruch 1, **dadurch gekennzeichnet, dass** zumindest ein weiteres Dichtelement (30) zwischen dem Gehäuse (14) und dem Einsatz (28) vorgesehen ist, um das Kolbenventil (10) nach außen abzudichten.

3. Kolbenventil (10) nach Anspruch 1 oder 2, **dadurch gekennzeichnet, dass** an dem beweglichen Schaltkolben (18) Dichtringe (32, 34, 36) angeordnet sind, die in zumindest einigen Schaltpositionen des beweglichen Schaltkolbens (18) eine weitere Verbindung (40) zwischen den zumindest zwei Anschlüssen (20, 22) des Kolbenventils (10) trennen.

4. Kolbenventil (10) nach einem der vorhergehenden Ansprüche, **dadurch gekennzeichnet, dass** an dem Einsatz (28) Dichtringe (32, 34, 36) angeordnet sind, die in Abhängigkeit von der Schaltposition des beweglichen Schaltkolbens (18) in zumindest einigen dieser Schaltpositionen eine weitere Verbindung (40) zwischen den zumindest zwei Anschlüssen (20, 22) des Kolbenventils (10) trennen.

## Claims

1. Piston valve (10), in particular for a pneumatic brake system of a vehicle, comprising
- a switching piston (18) movable in an axial direction (16) in a region (12) of a housing (14),
- at least two ports (20, 22), which are coupled to one another in a first switching position of the switching piston (18), and
- a sealing element (24), which seals a connection between the at least two ports (20, 22) in at least one second switching position of the switching piston (18),
- wherein an insert (28), which is fixed relative to the housing (14) and in which the movable switching piston (18) is at least partially guided, is provided in the housing (14) in the interior of the region (12), and
- wherein the sealing element (24) acts as a non-return valve between the at least two ports (20, 22),
**characterised in that**
- the sealing element (24) is designed as a groove ring with a flexible sealing lip (26), and
- the sealing element (24) is located between the insert (28) and the housing (14).

2. Piston valve (10) according to claim 1, **characterised in that** at least one further sealing element (30) is provided between the housing (14) and the insert (28) for sealing the piston valve (10) against the outside.

3. Piston valve (10) according to claim 1 or 2, **characterised in that** sealing rings (32, 34, 36), which break a further connection (40) between the at least two ports (20, 22) of the piston valve (10) in at least some switching positions of the movable switching piston (18), are mounted on the movable switching piston (18).

4. Piston valve (10) according to any of the preceding claims, **characterised in that** sealing rings (32, 34, 36), which break a further connection (40) between the at least two ports (20, 22) of the piston valve (10) as a function of the switching position of the movable switching piston (18) in at least some of these switching positions, are mounted on the insert (28).

## Revendications

1. Soupape (10) à piston, notamment pour un système de freinage pneumatique d'un véhicule, comprenant :
- un piston (18) de commutation mobile dans une direction (16) axiale dans une partie d'une enveloppe (14),
- au moins deux raccords (20, 22), qui, dans une première position de commutation du piston (18) de commutation, communiquent entre eux, et
- un élément (14) d'étanchéité, qui, dans au moins une deuxième position de commutation du piston (18) de commutation, rend étanche une liaison (38) entre les au moins deux raccords (20, 22),
- dans laquelle il est prévu, dans l'enveloppe (14) à l'intérieur de la partie (12), un insert (28), qui est fixé par rapport à l'enveloppe (14), et dans laquelle le piston (18) de commutation mobile est guidé, au moins en partie, et
- dans laquelle l'élément (24) d'étanchéité opère en clapet antiretour entre les au moins deux raccords (20, 22),
**caractérisée**
- **en ce que** l'élément (24) d'étanchéité est réalisé sous la forme d'un joint en U à lèvre (26) d'étanchéité souple et
- **en ce que** l'élément (24) d'étanchéité est disposé entre l'insert (28) et l'enveloppe (14).

2. Soupape (10) à piston suivant la revendication 1, **caractérisée en ce qu'**il est prévu au moins un autre élément (30) d'étanchéité entre l'enveloppe (14) et l'insert (28) pour rendre la soupape (10) à piston étanche vis-à-vis de l'extérieur.

3. Soupape (10) à piston suivant la revendication 1 ou 2, **caractérisée en ce que**, sur le piston (18) de commutation mobile, sont disposés des joints (32, 34, 36) toriques, qui, dans au moins certaines positions de commutation du piston (18) de commutation mobile, coupent une autre liaison (40) entre les au moins deux raccords (20, 22) de la soupape (10) à piston.

4. Soupape (10) à piston suivant l'une des revendications précédentes, **caractérisée en ce que**, sur l'insert (28), sont disposés des joints (32, 34, 36) toriques, qui, en fonction de la position de commutation du piston (18) de commutation mobile, coupent, dans au moins certaines de ses positions de commutation, une autre liaison (40) entre les au moins deux raccords (20, 22) de la soupape (10) à piston.
